# FASCICULE DE BREVET EUROPEEN

(11) **EP 0 975 477 B1**
(45) Date de publication et mention de la délivrance du brevet: **05.10.2005**
(21) Numéro de dépôt: 98928201.7
(22) Date de dépôt: 17.04.1998
(51) Int. Cl.: B60C 23/06, B60C 23/04

(54) **INSERT DE SECURITE GENERANT UN SIGNAL VIBRATOIRE TRANSVERSAL ET DISPOSITIF DE DETECTION DE LA MISE EN APPUI D'UN PNEUMATIQUE SUR UN INSERT**
NOTLAUFEINSATZ MIT GENERIERUNG EINES TRANSVERSALEN VIBRATIONSSIGNALS UND VORRICHTUNG ZUR DETEKTION DES INFUNKTIONTRETENS EINES NOTLAUFEINSATZES INNERHALB EINES REIFENS
SAFETY INSERT GENERATING A TRANSVERSE VIBRATION SIGNAL AND DEVICE FOR DETECTING OPERATION OF A TYRE ON THE INSERT

(30) Priorité: 18.04.1997 FR 9705243; 30.01.1998 FR 9801385; 03.03.1998 FR 9802809
(43) Date de publication de la demande: 02.02.2000
(73) Titulaire: Compagnie Générale des Etablissements MICHELIN-MICHELIN & CIE, 63040 Clermont-Ferrand Cedex 09 (FR)
(72) Inventeur: DUFOURNIER, Arnaud, F-63100 Clermont-Ferrand (FR); HOTTEBART, François, F-63130 Royat (FR)
(74) Mandataire: Dequire, Philippe Jean-Marie Denis
(86) Numéro de dépôt international: PCT/EP1998/002251
(87) Numéro de publication internationale: WO 1998/047728

(56) Documents cités:
- EP-A- 0 363 639
- EP-A- 0 421 065
- EP-A- 0 836 957
- WO-A-94/03338
- WO-A-99/38715
- FR-A- 2 713 558
- US-A- 4 262 724
- US-A- 4 742 712

## Description

L'invention concerne un insert de sécurité destiné à être monté dans un ensemble comprenant un pneumatique et une jante d'un véhicule.

Elle propose un insert qui avertit le conducteur dès que le pneumatique est en appui sur lui après crevaison ou en cas de perte de pression importante ainsi qu'un dispositif de détection de cette mise en appui pouvant notamment être associé avec l'insert proposé.

La fonction de ces inserts de sécurité qui sont, en général, montés sur la jante à l'intérieur du pneumatique, est de reprendre la charge en cas de défaillance du pneumatique.

La mise en appui du pneumatique sur l'insert de sécurité s'accompagne d'une dégradation plus ou moins marquée de ses performances qui peut ne pas être perceptible par le conducteur à travers le comportement et le confort du véhicule. De plus, la durée de vie en fonctionnement de ces inserts est limitée. Il est donc essentiel, pour sa sécurité, que le conducteur soit averti dès qu'un pneumatique est en appui sur son insert de sécurité, pour qu'il puisse se conformer aux instructions de leur fabricant.

Plusieurs inserts de sécurité incorporant des moyens pour avertir le conducteur de la mise en appui ont déjà été proposés.

Le brevet US 4 262 724 propose notamment un insert de sécurité destiné à être monté dans un ensemble comprenant un pneumatique et une jante et radialement extérieurement relativement à la jante. Cet insert a une surface radialement extérieure qui définit un appui radial pour le sommet du pneumatique lorsque le pneumatique est dégonflé ainsi que des moyens pour générer des signaux vibratoires avertisseurs lors d'un roulage en appui. Ces moyens peuvent être une variation du rayon de roulement sous appui de l'insert entre un rayon minimum et un rayon maximum pour créer une vibration en roulage ou une ou plusieurs bosses. Tous les signaux vibratoires avertisseurs générés par ces moyens sont orientés dans le plan de l'ensemble pneumatique et jante et plus précisément selon une direction sensiblement verticale.

Ces solutions posent plusieurs problèmes. Outre un inconfort marqué pour les passagers du véhicule, elles peuvent dégrader fortement le comportement de l'ensemble pneumatique et jante concerné particulièrement en accélération et au freinage. On ne peut ainsi qu'éviter l'immobilisation instantanée du véhicule en cas de défaillance du pneumatique. En revanche, lorsque l'on souhaite utiliser le véhicule, même à vitesse limitée, sur de longues distances, l'avertissement transmis par l'insert doit être compatible avec la sécurité de conduite, non pénalisant pour la mécanique, tout en restant parfaitement remarquable, directement ou par l'intermédiaire d'un dispositif de détection adapté, par le conducteur.

D'autre part, la demande de brevet WO 94/03338 propose un dispositif de détection de la mise en appui d'un pneumatique sur un insert de sécurité. Ce dispositif comprend un accéléromètre par roue, placé sur l'un des éléments de suspension de la roue et mesurant les accélérations verticales. Les accéléromètres sont reliés à une unité centrale de traitement. L'analyse est basée sur la détection de l'apparition lors de la mise en appui d'un mode de résonance caractéristique du roulage en appui.

Le document EP 0 363 369 divulgue un insert de sécurité correspondant aux préambules des revendications 1 et 2.

L'invention a pour objectif un insert de sécurité qui avertit le conducteur, directement ou non, dès la mise en appui du pneumatique dans une très large gamme de vitesses du véhicule tout en conservant un caractère supportable à la fois pour le conducteur et la mécanique, dans la gamme des vitesses autorisées.

L'invention a aussi pour objet un dispositif de détection de la mise en appui d'un pneumatique sur son insert de sécurité pouvant notamment coopérer avec l'insert de sécurité selon l'invention.

Dans ce qui suit, on entend par « véhicule » une unité roulante autonome, véhicule de tourisme, tracteur ou remorque poids lourd, caravane, motocyclette...

On appelle « nervure » un élément situé sur la surface radialement extérieure d'un insert de sécurité, de forme allongée, d'orientation sensiblement circonférentielle et dont la hauteur radiale est inférieure ou égale à la largeur axiale ; les nervures sont « droites » lorsque leur section axiale est rectangulaire et « inclinées » lorsque leur section axiale a la forme d'un parallélogramme.

On appelle « lamelle » un élément similaire dont la hauteur radiale est supérieure à la largeur axiale.

Des inserts de securité selon l'invention sont définis par les caractéristiques des revendications 1 et 2, et un dispositif de détection de la mise en appui d'un pneumatique d'un véhicule sur un des tels inserts est défini par la revendication 9.

Ces inserts ont deux avantages importants : les signaux vibratoires générés dans la direction transversale sont beaucoup plus aisément transmis au châssis et au conducteur que des signaux similaires orientés verticalement. Cela est dû à l'excellent filtrage réalisé par les suspensions des véhicules dans la direction verticale pour préserver le confort des passagers du véhicule alors que toute transmission d'effort dans la direction transversale est quasiment directe, avec peu d'organes de filtrage. D'autre part, ces signaux vibratoires transversaux dégradent nettement moins le comportement de l'ensemble pneumatique et jante concerné en ligne droite que ceux orientés verticalement.

Selon un premier mode de réalisation de l'invention, la surface d'appui de l'insert présente une variation de position transversale en fonction de son azimut.

Selon un second mode de réalisation, la surface d'appui de l'insert présente des nervures droites dont l'orientation circonférentielle varie en fonction de leur azimut.

Et, selon un troisième mode de réalisation, la surface d'appui de l'insert présente des éléments générant lors de leur mise en compression radiale un effort transversal.

Ce mode de réalisation est particulièrement souple. On peut en effet utiliser des nervures ou des lamelles inclinées relativement à un plan longitudinal de façon variable en fonction de leur azimut.

Selon une variante préférentielle, l'insert de sécurité selon l'invention a une surface d'appui avec au moins deux zones axialement adjacentes, la zone destinée à être disposée vers l'extérieur du véhicule ne comportant pas de moyens pour générer des signaux orientés parallèlement à l'axe de rotation de l'ensemble pneumatique et jante.

Cette dernière solution a l'avantage de préserver un excellent comportement en virage de l'ensemble pneumatique et jante lors d'un roulage sur l'insert de sécurité. En effet, lors d'un virage, les pneumatiques placés vers l'extérieur du virage sont les plus chargés et prennent usuellement un angle de contre carrossage marqué. Dans ces conditions, c'est la zone de l'appui « inactive » (c'est-à-dire ne comportant pas de moyens pour générer des signaux orientés parallèlement à l'axe de rotation de l'ensemble pneumatique et jante) qui va supporter la plus grande part de la charge du pneumatique sans générer de signaux vibratoires transversaux spécifiques. En revanche, lors d'un roulage ligne droite, les pneumatiques ont un angle de carrossage beaucoup plus faible et la zone de l'appui comportant des moyens pour générer des signaux vibratoires transversaux, la zone « active » est alors sollicitée.

La forme du signal généré par l'insert de sécurité est elle aussi très importante. De préférence, l'insert de sécurité selon l'invention comprend une surface d'appui avec une zone active de génération de signaux telle que lesdits signaux présentent un maximum précédé et suivi par un minimum de sens opposé.

La zone active est avantageusement comprise entre 1/4 et 1/2 de la circonférence dudit insert et la valeur absolue des minimums du signal généré est comprise entre 1/4 et 3/4 de la valeur absolue du maximum.

De tels signaux générés ont l'avantage de donner un spectre de vibrations transmises au châssis du véhicule lors d'un roulage en appui dans une bande de fréquences bien délimitée ce qui favorise une détection précise et fiable.

Le dispositif susmentionné présente la particularité, relativement aux dispositifs connus, d'effectuer une analyse des vibrations du châssis du véhicule au lieu des organes de suspension.

Comme dans l'insert précédemment décrit, ce dispositif peut utiliser préférentiellement les voies de transmission directe des vibrations entre les roues et le châssis, en plus des directions verticales. En conséquence, ce dispositif peut être beaucoup plus sélectif et sensible que les dispositifs existants et n'avoir qu'un seul capteur rigidement lié à l'une des pièces du châssis.

Le dispositif selon l'invention est particulièrement bien adapté à la détection de la mise en appui d'un pneumatique sur un insert de sécurité selon l'invention, mais, il peut aussi être utilisé avec tout autre insert, comportant ou ne comportant pas de moyens d'alerte vibratoires de la mise en appui. Dans ce cas, il peut être nécessaire d'utiliser deux capteurs de mesure des accélérations ou plus, au lieu d'un seul. Chaque capteur est alors, de préférence, relié à l'un des essieux du véhicule.

Les moyens de traitement des vibrations du châssis calculent une première grandeur caractéristique dans au moins une bande de fréquence donnée, calculent un critère C correspondant à une combinaison donnée de la ou des premières grandeurs caractéristiques précédentes, comparent ce critère C à un seuil donné et déclenchent une alarme lorsque le résultat de la comparaison obéit à une relation donnée.

Préférentiellement, pour chacun des essieux du véhicule, les moyens de traitement calculent une première grandeur caractéristique dans au moins une première bande de fréquences spécifique à l'essieu du véhicule et calculent un critère C correspondant à une valeur pondérée de ces premières grandeurs caractéristiques.

Les moyens de traitement des vibrations du châssis peuvent aussi calculer, en plus, une seconde grandeur caractéristique dans une seconde bande de fréquences donnée telle que, dans ladite seconde bande, lesdites vibrations sont sensiblement indépendantes de la mise en appui du pneumatique sur son insert de sécurité et en déduire un critère C correspondant à une valeur normée par cette seconde grandeur caractéristique des premières grandeurs caractéristiques, pondérées ou non.

Selon un mode de réalisation préférentiel, les moyens de traitement déterminent en plus la fréquence de rotation du pneumatique et ladite ou lesdites premières bandes de fréquences sont des bandes de fréquence étroites centrées chacune sur une fréquence multiple de ladite fréquence de rotation du pneumatique. De préférence, ces premières bandes de fréquences sont comprises entre 10 et 200 Hz.

Le traitement centré sur les fréquences multiples de la fréquence de rotation du pneumatique améliore très sensiblement la sensibilité de la détection de la mise en appui.

La grandeur caractéristique calculée peut être la valeur RMS des signaux.

Plusieurs modes de réalisation de l'invention sont maintenant décrits à l'aide du dessin annexé dans lequel :
- la figure 1 présente, en coupe méridienne, un ensemble pneumatique et jante équipé d'un insert de sécurité ;
- la figure 2 présente, en coupe méridienne, un premier mode de réalisation d'un insert de sécurité selon l'invention ;
- la figure 3 présente, en coupe méridienne, un second mode de réalisation ;
- la figure 4 présente, en coupe méridienne, un troisième mode de réalisation ;
- la figure 5 présente, en coupe transversale, un insert de sécurité avec deux zones axialement adjacentes ;
- la figure 6 présente schématiquement une forme préférentielle de signaux générés par l'insert en roulage ;
- la figure 7 présente un schéma d'un dispositif de détection selon l'invention ;
- la figure 8 présente deux spectres de mesure des accélérations sensiblement horizontales en fonction de la fréquence avec et sans appui enregistrés sur une route usuelle ;
- la figure 9 présente un exemple d'évolution en fonction du temps lors d'un roulage avec ou sans appui de la grandeur résultante calculée par le microcontrôleur du dispositif ;

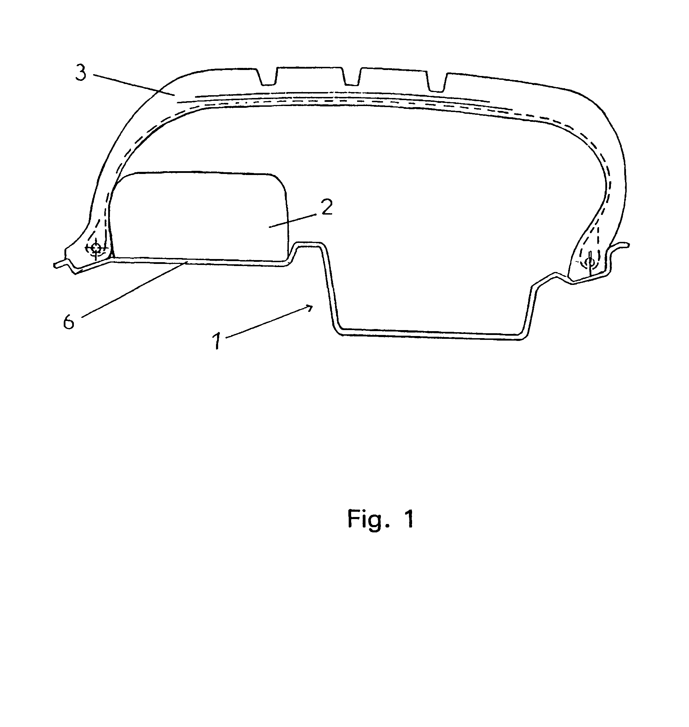

On voit aux figures 1 une jante 1 de roue équipée d'un insert annulaire de sécurité 2 reposant sur la portée 6 de la jante 1. La géométrie particulière de cette jante 1 de roue est notamment décrite dans la demande de brevet français n° 2 713 558. Elle présente deux sièges de bourrelets de diamètres différents et est particulièrement adaptée pour la mise en place aisée de cet insert de sécurité 2. Cet ensemble permet le roulage malgré une baisse de pression importante dans le pneumatique 3. Dans le cas d'un tel roulage, l'intérieur du pneu déformé frotte sur la surface extérieure de l'insert provoquant un échauffement qui limite le rayon d'action disponible : il importe donc que le conducteur soit informé dès la mise en appui d'un pneumatique sur son insert 2.

A cet effet, on utilise avantageusement comme insert un insert de sécurité selon l'invention comportant des moyens pour générer des signaux vibratoires avertisseurs transversaux.

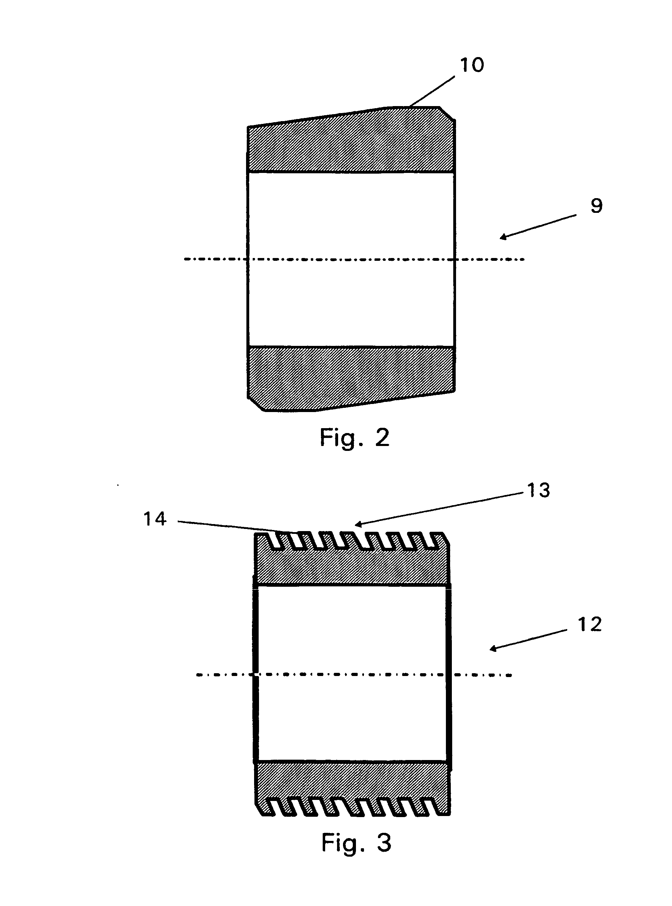

Un premier mode de réalisation d'un tel insert est présenté à la figure 2. Cet insert 9 présente une surface d'appui 10 qui se décale axialement en fonction de son azimut. En conséquence, lors d'un roulage en appui de cette surface 10 contre celle du sommet du pneumatique, l'ensemble pneumatique jante et insert va produire à chaque tour de roue une oscillation de poussée latérale que le conducteur ou un dispositif de détection vont aisément sentir.

La figure 3 présente une autre mode de réalisation. La surface d'appui 13 de cet insert 12 présente des lamelles 14 inclinées relativement à un plan transversal de l'insert et dont l'inclinaison est variable en fonction de leur azimut. Dans l'exemple présenté, l'inclinaison de ces lamelles est diamétralement opposée et l'évolution de l'inclinaison est sensiblement sinusoïdale. Ces lamelles vont donc produire lors de leur écrasement des efforts transversaux de même fréquence que le tour de roue, à nouveau aisément perceptibles par le conducteur du véhicule, directement ou non.

On peut aussi utiliser des nervures ou préférentiellement des nervures relativement larges disposées de façon adjacente à des lamelles de hauteur radiale similaire ou supérieure. Dans ce dernier cas, il est avantageux de concevoir la rigidité et la géométrie de ces nervures et de ces lamelles de telle sorte que le rayon de roulement de l'insert reste constant lors d'un roulage sous appui.

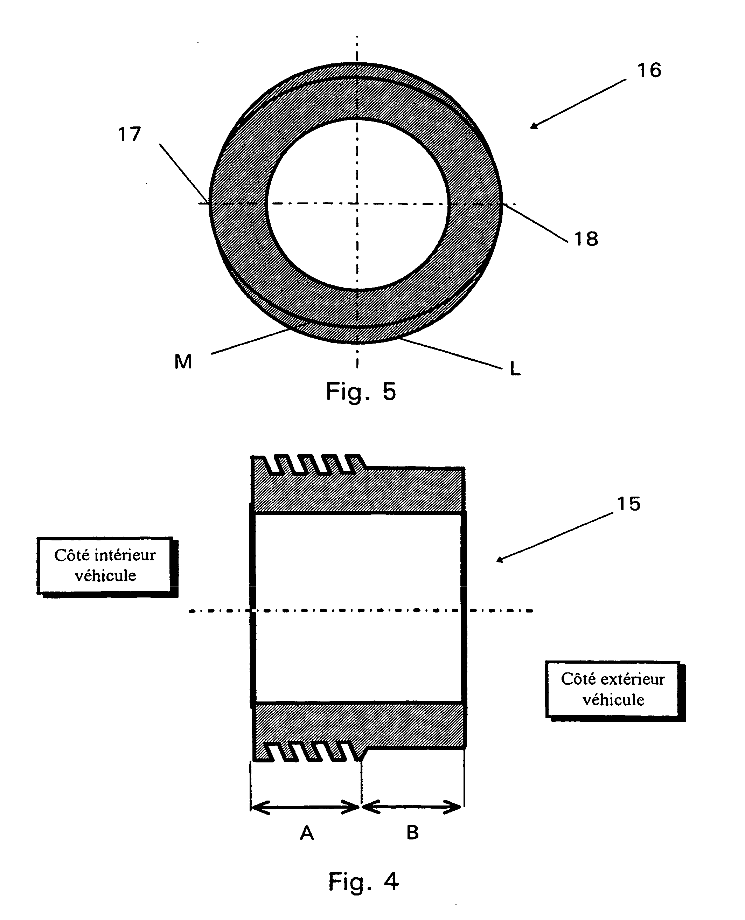

La figure 4 présente un insert de sécurité 15 comportant deux zones A et B adjacentes axialement. La zone B disposée du côté destiné à être placé vers l'extérieur du véhicule ne comporte pas de moyens pour générer des signaux orientés parallèlement à l'axe de rotation de l'ensemble pneumatique et jante. Cette zone est ainsi inactive alors que la zone A disposée vers l'intérieur du véhicule comprend des lamelles inclinées pour générer des signaux vibratoires transversaux. Cet insert 15 permet de conserver un excellent comportement en virage car alors, c'est la zone B sensiblement cylindrique qui supporte la plus grande partie de la charge de l'appui du sommet du pneumatique en raison de l'angle de contre carrossage important pris par celui-ci. En ligne droite, le fonctionnement de l'insert 15 est similaire à celui des figures 2 et 3.

Un tel insert peut aussi avantageusement avoir une zone B légèrement conique avec son diamètre minimum du côté extérieur de l'insert pour bien s'adapter à l'angle de contre carrossage pris par le pneumatique et la roue en virage. On peut aussi avoir un insert comportant deux zones cylindriques ou coniques adjacentes extérieurement à une zone active centrale.

La figure 5 présente un insert 16 comportant en plus de lamelles d'inclinaison variable en fonction de l'azimut, deux bosses radiales 17 et 18 créées en donnant aux lamelles une hauteur variable en fonction de l'azimut qui vont entraîner une excitation vibratoire verticale. Le cercle L correspond à l'extérieur de la surface d'appui de l'insert et l'ovale M correspond à l'enveloppe du fond des lamelles. Les lamelles dans l'exemple présenté ont ainsi une épaisseur nulle aux deux sommets des bosses 17 et 18. On a en effet constaté qu'un tel insert 16 couplant des générations de vibrations transversales et verticales augmente sensiblement l'énergie totale transmise dans le véhicule.

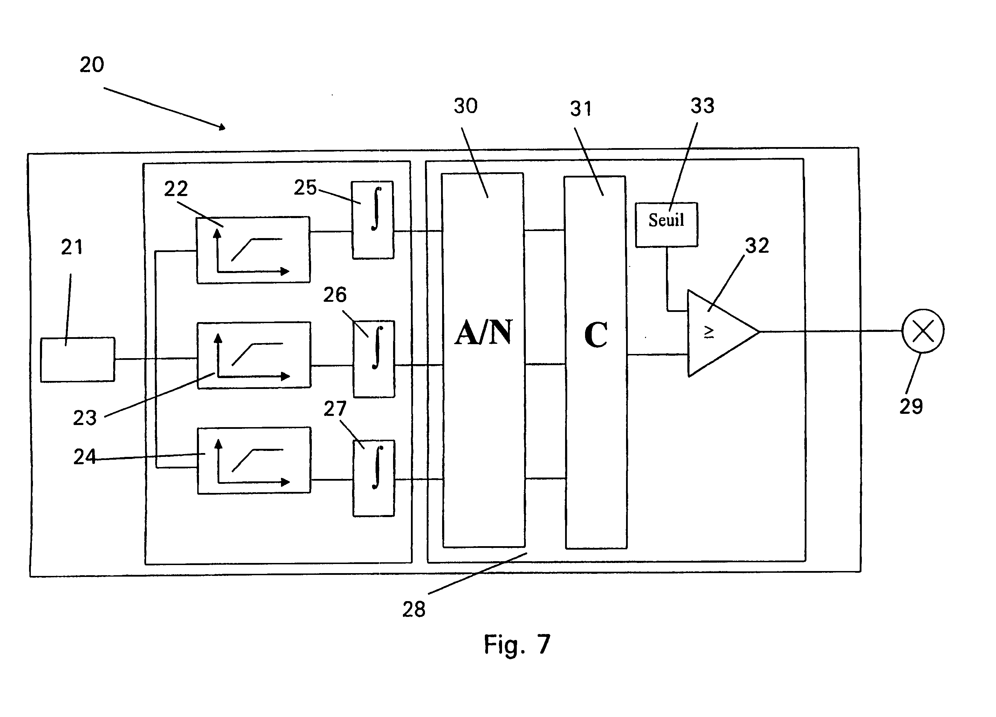

La figure 6a présente une forme préférentielle de signal généré par un insert de sécurité selon l'invention. Ce signal ne diffère de zéro que dans une zone limitée à environ 1/3 de la circonférence de l'insert. Il comprend un premier minimum F_{Ymin} suivi par un maximum F_{Ymax} de sens opposé et suivi enfin d'un second minimum. Les deux minima peuvent avoir la même amplitude comprise entre 1/5 et 1/2 de F_{Ymax}.

Les inserts de sécurité décrits précédemment peuvent très aisément générer des signaux similaires à ceux de la figure 6. Il suffit que le moyen utilisé pour générer les signaux en Y varient de façon similaire. Dans le cas de l'insert 9, la position latérale de la surface d'appui 10 peut suivre une évolution correspondant à celle de la figure 6a ou 6b. En raison de la pondération due à la longueur finie de l'aire de contact entre le pneumatique et la surface d'appui de l'insert, une variation similaire à celle de la figure 6b donnera une évolution de signal généré proche de la forme de la courbe 6a. Dans le cas de l'insert 12 de la figure 3, c'est l'orientation des nervures ou des lamelles qui doit suivre une évolution correspondant aux courbes 6a ou 6b.

De façon usuelle, pour limiter les échauffements de l'insert et du pneumatique lors d'un roulage en appui, on introduit dans la cavité interne du pneumatique et particulièrement à la surface d'appui de l'insert un lubrifiant. Pour améliorer l'adhérence entre la surface d'appui de l'insert et le sommet du pneumatique, il est avantageux de disposer à la surface d'appui des lamelles d'orientation sensiblement circonférentielle qui vont jouer le même rôle que des lamelles des sculptures des pneumatiques pour évacuer l'eau dans l'aire de contact entre le pneumatique et le sol.

Les inserts de sécurité selon l'invention peuvent générer des signaux d'intensité suffisamment grande pour être perçue par le conducteur d'un véhicule. Cependant, on peut aussi, pour préserver le confort des passagers du véhicule, utiliser ces inserts avec un dispositif de détection de la mise en appui qui va maintenant être décrit.

La figure 7 présente schématiquement un dispositif de détection selon l'invention destiné à être utilisé avec un véhicule de tourisme à deux essieux, par exemple une Renault Twingo. Ce dispositif 20 comprend un capteur 21 ; une série de filtres passe-bande 22, 23, 24 ; trois extracteurs 25, 26, 27 analogiques de la valeur RMS des signaux ; un microcontrôleur 28 et un afficheur 29. L'ensemble est placé dans un boîtier unique destiné à être rigidement lié à l'une des pièces du châssis du véhicule. Le capteur 21 est de préférence un accéléromètre unidirectionnel disposé dans le véhicule de telle sorte qu'il mesure les accélérations dans un plan comprenant les axes longitudinal et transversal du véhicule. Les signaux sont ensuite filtrés par une série de filtres passe-bande disposés en parallèle. Le filtre 22 élimine les signaux en dehors d'une bande A adaptée à l'essieu arrière du véhicule, de l'ordre de 20 à 50 Hz. Le filtre 23 élimine les signaux en dehors d'une bande B adaptée à l'essieu avant du véhicule, de l'ordre de 50 à 80 Hz et le filtre 24 laisse passer les signaux compris dans une bande E dans laquelle les signaux sont sensiblement indépendants de la mise en appui d'un pneumatique sur son insert de sécurité, de l'ordre de 100 à 200 Hz ou de préférence de 100 à 160 Hz. Ces trois bandes de fréquence peuvent notamment varier en fonction du type d'insert de sécurité utilisé ainsi qu'en fonction du véhicule choisi.

Les extracteurs 25, 26 et 27 extraient les valeurs RMS des signaux transmis respectivement par les filtres passe-bande 22, 23 et 24. Le microcontrôleur 28 digitalise les signaux dans le convertisseur analogique numérique (A/N) 30. L'élément 31 du microcontrôleur 28 calcule un critère C, il peut notamment effectuer une somme pondérée des valeurs RMS des signaux des bandes A et B et normer cette somme par la valeur RMS des signaux de la bande E.

L'énergie vibratoire comprise dans la bande E est fonction du type de sol sur lequel le véhicule roule. La normation obtenue améliore sensiblement la sensibilité du dispositif de détection en réduisant le nombre de fausses alarmes. Cette bande E peut aussi se situer dans une bande de fréquences très basses de l'ordre de 3 à 7 Hz par exemple.

Le critère C est ensuite comparé à un seuil donné programmable 33 dans le comparateur 32 et une alarme est déclenchée au moyen de l'afficheur 29 lorsque C est supérieur à ce seuil.

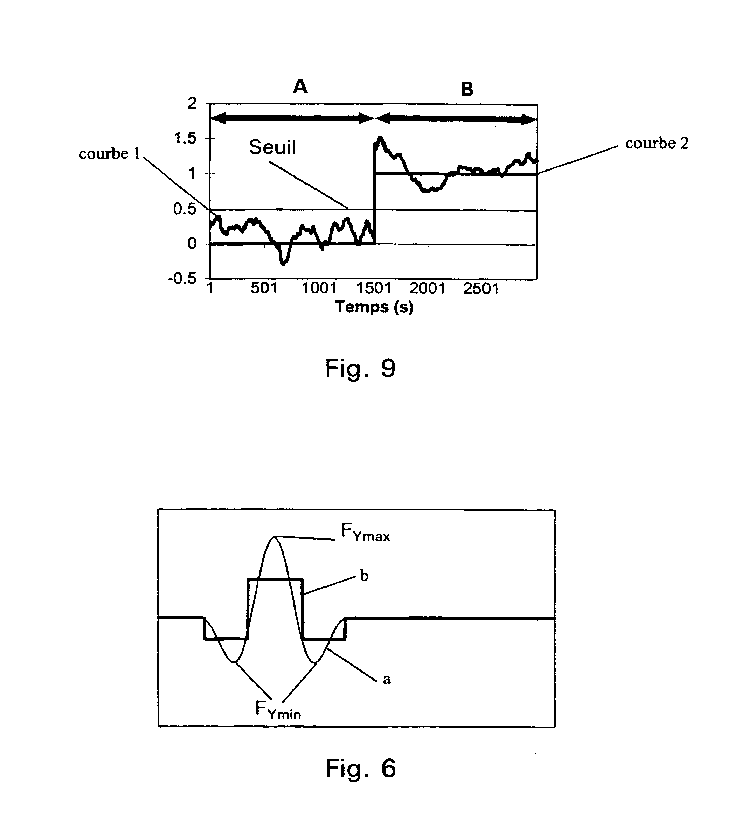

La figure 9 présente l'évolution du critère C lorsque les quatre pneumatiques de la Renault Twingo sont correctement gonflés (zone A) et lorsque l'un de ces pneumatiques est dégonflé ce qui entraîne la mise un appui de ce pneumatique sur son insert de sécurité (zone B). Les courbes 1 montrent l'évolution brute de C, et les courbes 2, le résultat après la comparaison avec le seuil. Ce résultat est zéro lorsque C est inférieur au seuil et est 1 lorsque C est supérieur au seuil.

L'afficheur transmet une alarme au conducteur lorsque le résultat de la comparaison est 1. Cet afficheur peut aussi être complété par un buzzer.

Dans le cas d'un véhicule poids lourd, on peut déterminer autant de bandes de fréquences à retenir qu'il y a d'essieux dans le véhicule, tracteur ou remorque. Il y a aussi, bien entendu, autant de capteurs qu'il y a de véhicules.

Lorsque la vitesse du véhicule diminue et devient proche de zéro, l'énergie vibratoire des différents signaux diminue et devient de plus en plus sensible à des perturbations locales. En conséquence, on peut arrêter le déclenchement des alarmes lorsque la vitesse du véhicule est inférieure à un seuil donné, par exemple 7 km/h..

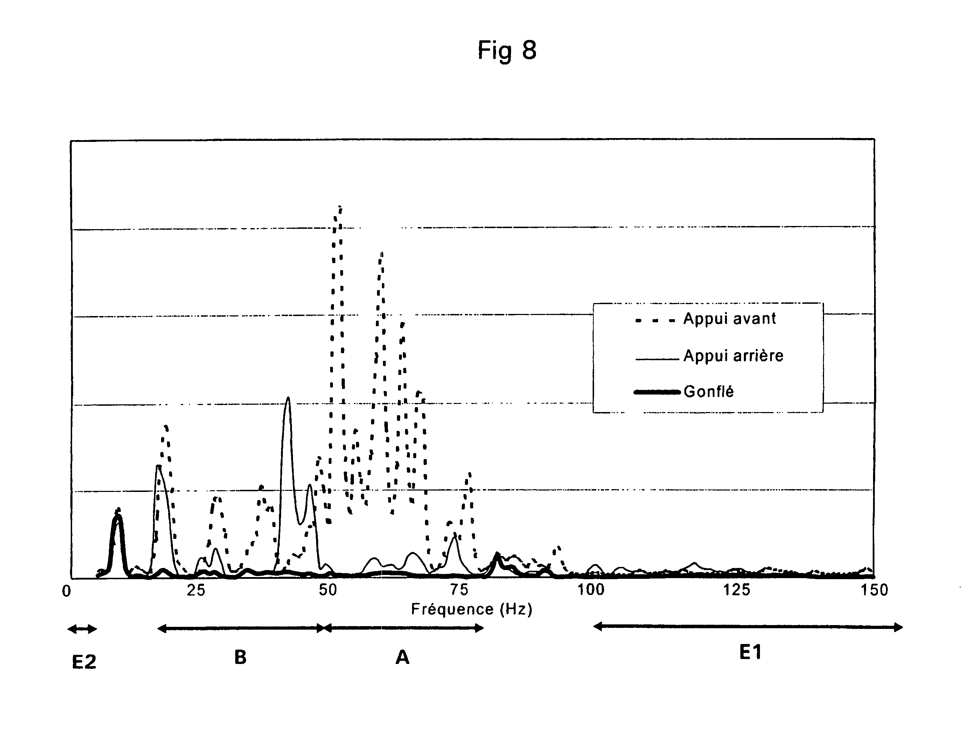

La figure 8 présente un exemple de spectre des vibrations mesurées par le capteur 21 lors d'un roulage avec la Renault Twingo. Une première courbe correspond au cas où les quatre pneumatiques sont correctement gonflés. On constate usuellement un pic situé aux basses fréquences, vers 9 Hz ; ce pic correspond à la première harmonique du tour de roue.

Une seconde courbe correspond au cas où un pneumatique de l'essieu avant est dégonflé et en appui sur son insert de sécurité. Cette courbe présente une forte réponse spectrale entre 50 et 75 Hz avec des pics liés aux différents harmoniques du tour de roue. Dans ce cas, on a choisi comme bande de fréquence caractéristique de cet essieu avant la bande B 50-80 Hz.

La troisième courbe illustre le cas où l'un des pneumatiques de l'essieu arrière de la Renault Twingo est en appui sur son insert de sécurité. On observe deux pics notables vers 20 et 40 Hz. On choisit alors comme bande caractéristique de l'essieu arrière la bande A 20-50 Hz.

On constate aussi sur la figure 8 que, dans les fréquences inférieures à 7 Hz, ou entre 100 et 200 Hz, il n'y a pratiquement pas de modification notable des courbes lors d'un roulage en appui ou non. En conséquence, pour tenir compte de l'énergie de vibration due au type de sol sur lequel le véhicule roule, on norme les mesures dans les bandes de fréquences caractéristiques précédentes par la mesure des valeurs RMS dans une bande E telle 100-160 Hz ou 3-7 Hz. Cela permet de fiabiliser notablement la qualité de la détection de la mise en appui. Lorsque la vitesse du véhicule diminue de telle sorte que le premier harmonique du tour de roue devient de l'ordre de 7 Hz, pour éviter les perturbations, on inhibe la transmission des alarmes.

Pour avoir un critère unique de détection de mise en appui et compte tenu des notables différences énergétiques entre les mesures lors de la mise en appui d'un pneumatique avant ou arrière sur son insert, on peut pondérer les mesures pour obtenir une grandeur caractéristique sensiblement de même valeur quel que soit l'essieu du pneumatique en appui sur son insert. C'est ce qui est fait pour la courbe présentée à la figure 9.

Les courbes 8 et 9 sont obtenues avec un insert de sécurité générant un signal transversal sur le tiers de la circonférence de l'insert et variant entre zéro et F_{Ymax}. Ce signal généré a un spectre plus large que celui de la figure 6. Le dispositif de détection utilisé a un capteur unidirectionnel unique rigidement lié au châssis du véhicule placé avec une orientation transversale.

La forme de signal présentée à la figure 6 a l'avantage de bien délimiter en fréquence les signaux transmis au châssis du véhicule et de concentrer dans principalement une seule bande de fréquence ces signaux. Cette bande est définie pour comprendre, quelle que soit la vitesse du véhicule au-delà de quelques kilomètres/heure, les bandes de fréquence caractéristiques de chacun des essieux du véhicule. Cela permet de fiabiliser la qualité de la détection et de limiter les fausses alarmes. Cela permet aussi d'utiliser au mieux l'énergie transmise sans dégrader le confort du véhicule. On peut ainsi diminuer les valeurs de F_{Ymax} de ces signaux.

Selon un autre mode de traitement, les moyens de traitement :
- déterminent la fréquence de rotation des pneumatiques du véhicule ;
- calculent les fréquences des n premières harmoniques de la fréquence de rotation des pneumatiques (le tour de roue) ;
- calculent les énergies de vibration des n bandes étroites de fréquence centrées sur les n premières harmoniques ;
- effectuent, si nécessaire, la somme des trois énergies maximales pour obtenir un critère C;
- comparent ce critère C à un seuil fonction de la vitesse et des irrégularités du sol ; et
- déclenchent une alarme si C est supérieur à ce seuil.

L'information vitesse peut être obtenue à partir du tachymètre du véhicule, elle peut aussi être déduite des signaux enregistrés en déterminant la position en fréquence du premier pic (voir figure 8).

On entend par « bande étroite » de fréquence, une bande de largeur inférieure à 5 Hz.

Comme on peut le voir sur les courbes de la figure 8, les fréquences correspondant aux harmoniques du premier pic (le tour de roue) sont aussi des pics du spectre. En conséquence, effectuer l'analyse sur les harmoniques du tour de roue permet d'améliorer très sensiblement la détection de la mise en appui d'un pneumatique sur son appui de sécurité.

Pour faciliter les calculs, on peut se limiter à quelques harmoniques, de 5 à 11 par exemple, de l'harmonique 2 à l'harmonique 6 ou 12, selon les véhicules. Les fréquences correspondantes, pour une large gamme de vitesse du véhicule, se trouvent dans la bande de fréquences où les vibrations de l'insert peuvent être transmises au châssis du véhicule par les divers éléments de suspension. Cette bande est usuellement comprise entre 10 et 200 Hz.

Comme il est toujours possible qu'un ou plusieurs pics soient perturbés par d'autres sources, par exemple les vibrations du moteur, il est utile d'analyser ces harmoniques, de calculer les énergies de vibration des bandes étroites centrées sur elles, et de sommer par exemple les trois bandes d'énergies maximales pour calculer le critère C.

Comme précédemment, il est utile de déterminer l'énergie de vibration dans au moins une bande de fréquence où le spectre mesuré est sensiblement indépendant de la mise en appui pour pouvoir estimer la part due aux inégalités de la route parcourue. Dans ce mode de dépouillement, cette deuxième bande ne doit pas comporter les harmoniques du tour de roue.

Le critère C est fonction de la vitesse du véhicule, on peut le comparer à un seuil fonction de la vitesse et du niveau d'énergie de vibration due au sol et comme précédemment déclencher une alarme lorsque ce seuil est franchi.

Pour éviter les fausses alarmes, deux tests de non déclenchement de l'alarme sont prévus. Le premier est lié à la vitesse du véhicule, il prévoit une neutralisation de l'alarme lorsque la vitesse est inférieure à un seuil donné par exemple 25 km/h. La détermination de l'énergie due aux irrégularités de la route permet d'introduire le second test de non déclenchement de l'alarme lorsque cette énergie liée à la route est supérieure à une valeur donnée. Dans ce cas, cela correspond à un roulage sur une très mauvaise route et l'énergie due aux irrégularités de la route est telle qu'elle rend trop aléatoire une détection de la mise en appui.

Les inserts de sécurité selon l'invention peuvent être réalisés essentiellement en matériau élastomérique de toute rigidité. Ils peuvent aussi être réalisés en tout autre matériau, par exemple en un matériau plastique chargé ou non.

## Revendications

1. Insert de sécurité (9, 15) destiné à être monté dans un ensemble comprenant un pneumatique (3) et une jante (1) d'un véhicule et radialement extérieurement relativement à la jante (1), ledit insert ayant une surface d'appui (10) radialement extérieure qui définit un appui radial pour le sommet du pneumatique lorsque ledit pneumatique est dégonflé et des moyens pour générer des signaux vibratoires avertisseurs lors d'un roulage en appui, **caractérisé en ce que** lesdits moyens consistent en une variation en fonction de l'azimut d'au moins une caractéristique de ladite surface d'appui (10) choisie dans le groupe de la position transversale de la surface d'appui et de l'orientation circonférentielle de nervures droites disposées sur la surface d'appui.

2. Insert de sécurité (12, 15, 16) destiné à être monté dans un ensemble comprenant un pneumatique (3) et une jante (1) d'un véhicule et radialement extérieurement relativement à la jante (1), ledit insert ayant une surface d'appui (13) radialement extérieure qui définit un appui radial pour le sommet du pneumatique lorsque ledit pneumatique est dégonflé et des moyens pour générer des signaux vibratoires avertisseurs lors d'un roulage en appui, **caractérisé en ce que** lesdits moyens consistent en des éléments (14) disposés sur la surface d'appui (13) générant lors de leur mise en compression radiale un effort transversal et **en ce que** lesdits éléments comprennent des nervures ou des lamelles (14) dont les inclinaisons relativement à un plan longitudinal sont variables en fonction de leur azimut.

3. Insert de sécurité (12, 15, 16) selon la revendication 2, dans lequel la surface d'appui (13) a un rayon de roulement sous appui sensiblement constant.

4. Insert de sécurité (15) selon l'une des revendications 1 à 3, dans lequel la surface d'appui présente au moins deux zones (A, B) axialement adjacentes, la zone (B) destinée à être disposée vers l'extérieur du véhicule ne comportant pas de moyens pour générer des signaux orientés parallèlement à l'axe de rotation de l'ensemble pneumatique et jante.

5. Insert de sécurité (16) selon l'une des revendications 1 à 4, comportant en plus des moyens (18, 19) pour générer des signaux verticaux.

6. Insert de sécurité (9, 12, 15, 16) selon l'une des revendications 1 à 5, dans lequel la surface d'appui de l'insert comprend une zone active de génération de signaux telle que lesdits signaux présentent un maximum précédé et suivi par un minimum de sens opposé.

7. Insert de sécurité (9, 12, 15, 16) selon la revendication 6, dans lequel ladite zone active est comprise entre 1/4 et 1/2 de la circonférence dudit insert.

8. Insert de sécurité (9, 12, 15, 16) selon l'une des revendications 6 ou 7, dans lequel la valeur absolue des minimums du signal généré est comprise entre 1/4 et 3/4 de la valeur absolue du maximum.

9. Dispositif (20) de détection de la mise en appui d'un pneumatique d'un véhicule, équipé d'une pluralité d'ensembles pneumatique (3), jante (1) et insert de sécurité (9, 12, 15, 16) selon l'une des revendications 1 à 8, monté entre la jante et la face radialement interne de la bande de roulement du pneumatique, sur l'insert de sécurité correspondant, chaque ensemble étant propre à transmettre une vibration caractéristique au châssis du véhicule en réponse à la mise en appui d'un des pneumatiques sur l'insert de sécurité correspondant par suite d'une perte de pression dans le pneumatique, comprenant :
- des moyens de détection (21) et de traitement (22-28, 30-33) d'une telle vibration mécanique de caractéristique prédéterminée du châssis du véhicule ; et
- des moyens de transmission (29) d'une alarme.

10. Dispositif selon la revendication 9, dans lequel, le véhicule comprenant au moins deux essieux, les moyens de détection (21) d'une vibration caractéristique prédéterminée du châssis du véhicule comportent au plus un capteur (21) par essieu dudit véhicule.

11. Dispositif selon la revendication 10 dans lequel les moyens de détection d'une vibration prédéterminée du châssis du véhicule comportent un capteur (21) unique lié au véhicule.

12. Dispositif selon la revendication 11, dans lequel les moyens de détection d'une vibration caractéristique prédéterminée du châssis du véhicule comportent un capteur (21) unique rigidement lié au châssis du véhicule.

13. Dispositif selon l'une des revendications 9 à 12, dans lequel les moyens de traitement calculent une première grandeur caractéristique dans au moins une première bande de fréquence donnée, calculent un critère C correspondant à une combinaison donnée de la ou des premières grandeurs caractéristiques précédentes, comparent ce critère C à un seuil donné et déclenchent une alarme lorsque le résultat de la comparaison obéit à une relation donnée.

14. Dispositif selon la revendication 13, dans lequel, pour chacun des essieux du véhicule, les moyens de traitement calculent une première grandeur caractéristique dans au moins une première bande de fréquences spécifique audit essieu du véhicule.

15. Dispositif selon la revendication 14, dans lequel les moyens de traitement calculent un critère C correspondant à une valeur pondérée desdites premières grandeurs caractéristiques desdites premières bandes de fréquences spécifiques desdits essieux du véhicule.

16. Dispositif selon l'une des revendications 13 à 15, dans lequel la ou les premières bandes de fréquences sont comprises entre 20 et 100 Hz.

17. Dispositif selon la revendication 13, dans lequel les moyens de traitement déterminent en plus la fréquence de rotation du pneumatique et dans lequel ladite ou lesdites premières bandes de fréquences sont des bandes de fréquence étroites centrées chacune sur une fréquence multiple de ladite fréquence de rotation du pneumatique.

18. Dispositif selon la revendication 17, dans lequel ladite ou lesdites premières bandes de fréquences sont comprises entre 10 et 200 Hz.

19. Dispositif selon l'une des revendications 13 à 18, dans lequel les moyens de traitement des vibrations du châssis calculent en plus une seconde grandeur caractéristique dans au moins une seconde bande de fréquences donnée telle que, dans ladite seconde bande, lesdites vibrations sont sensiblement indépendantes de la mise en appui du pneumatique sur son insert de sécurité et tel que le seuil de déclenchement de l'alarme est fonction de ladite seconde grandeur caractéristique.

20. Dispositif selon la revendication 19, dans lequel ladite seconde bande de fréquences est comprise entre 3 et 7 Hz.

21. Dispositif selon la revendication 19, dans lequel ladite seconde bande de fréquences est comprise entre 100 et 200 Hz.

22. Dispositif selon la revendication 19, dans lequel lesdites secondes bandes sont situées en dehors des fréquences multiples de la fréquence de rotation du pneumatique.

23. Dispositif selon l'une des revendications 13 à 22, dans lequel la grandeur caractéristique mesurée est l'énergie de vibration des signaux exprimée par la valeur RMS.

24. Dispositif selon l'une des revendications 13 à 23, dans lequel les moyens de traitement ne transmettent pas d'alarme lorsque la vitesse du véhicule est inférieure à un seuil donné.

## Patentansprüche

1. Sicherheitseinsatz (9, 15), der dafür vorgesehen ist, in einer Einheit, die einen Luftreifen (3) und eine Felge (1) eines Fahrzeuges umfasst, und in radialer Richtung auf der Außenseite, bezogen auf die Felge (1), montiert zu werden, wobei der Einsatz eine Auflagefläche (10) in radialer Richtung auf der Außenseite, die eine radiale Auflage für den Scheitel des Luftreifens bildet, wenn der Luftreifen luftleer ist, und eine Einrichtung für die Erzeugung warnender Vibrationssignale beim Rollen mit aufliegendem Reifen aufweist, **dadurch gekennzeichnet, dass** die Einrichtung aus einer Variation mindestens eines Merkmals der Auflagefläche (10) in Abhängigkeit vom Azimut besteht, das aus der Gruppe ausgewählt wird, die die transversale Position der Auflagefläche und die Orientierung rechtwinkeliger Rippen in Umfangsrichtung, die auf der Auflagefläche angeordnet sind, umfasst.

2. Sicherheitseinsatz (12, 15, 16), der dafür vorgesehen ist, in einer Einheit, die einen Luftreifen (3) und eine Felge (1) eines Fahrzeuges umfasst, und in radialer Richtung auf der Außenseite, bezogen auf die Felge (1), montiert zu werden, wobei der Einsatz eine Auflagefläche (13) in radialer Richtung auf der Außenseite, die eine radiale Auflage für den Scheitel des Luftreifens bildet, wenn der Luftreifen luftleer ist, und eine Einrichtung für die Erzeugung warnender Vibrationssignale beim Rollen mit aufliegendem Reifen aufweist, **dadurch gekennzeichnet, dass** die Einrichtung aus Elementen (14) besteht, die auf der Auflagefläche (13) angeordnet sind, die eine Kraft in Querrichtung erzeugen, wenn sie in radialer Richtung einer Kompression ausgesetzt werden, und dass diese Elemente Rippen oder Lamellen (14) umfassen, deren Neigung, bezogen auf eine Längsebene, in Abhängigkeit von ihrem Azimut variiert.

3. Sicherheitseinsatz (12, 15, 16) nach Anspruch 2, wobei die Auflagefläche (13) beim Aufliegen des Reifens einen im wesentlichen konstanten Rollradius aufweist.

4. Sicherheitseinsatz (15) nach einem der Ansprüche 1 bis 3, wobei die Auflagefläche mindestens zwei Zonen (A, B) aufweist, die in axialer Richtung benachbart sind, wobei die Zone (B), die dafür vorgesehen ist, in Richtung der Außenseite des Fahrzeugs angeordnet zu werden, keine Einrichtung für die Erzeugung von Signalen aufweist, die parallel zur Rotationsachse der Einheit aus Luftreifen und Felge orientiert sind.

5. Sicherheitseinsatz (16) nach einem der Ansprüche 1 bis 4, der zusätzlich eine Einrichtung (18, 19) zur Erzeugung von vertikalen Signalen umfasst.

6. Sicherheitseinsatz (9, 12, 15, 16) nach einem der Ansprüche 1 bis 5, wobei die Auflagefläche des Einsatzes eine aktive Zone zur Erzeugung von Signalen aufweist, wie den Signalen, die zunächst ein Maximum aufweisen, auf das ein Minimum in entgegengesetzter Richtung folgt.

7. Sicherheitseinsatz (9, 12, 15, 16) nach Anspruch 6, wobei die aktive Zone im Bereich von 1/4 bis 1/2 des Umfangs dieses Einsatzes enthalten ist.

8. Sicherheitseinsatz (9, 12, 15, 16) nach einem der Ansprüche 6 oder 7, wobei der Absolutwert der Minima des erzeugten Signals im Bereich von 1/4 bis 3/4 des Absolutwertes des Maximums liegt.

9. Vorrichtung (20) zum Detektieren des Aufliegens eines Luftreifens eines Fahrzeuges, das mit einer Mehrzahl von Einheiten aus Luftreifen (3), Felge (1) und Sicherheitseinsatz (9, 12, 15, 16) nach einem der Ansprüche 1 bis 8 ausgestattet ist, die zwischen der Felge und der in radialer Richtung inneren Seite des Laufstreifens des Luftreifens auf dem entsprechenden Sicherheitseinsatz montiert ist, wobei jede Einheit dafür geeignet ist, als Antwort auf das Aufliegen eines Luftreifens auf dem entsprechenden Sicherheitseinsatz in Folge eines Druckverlustes in dem Luftreifen eine charakteristische Vibration auf den Fahrzeugrahmen zu übertragen, die umfasst:
- eine Einrichtung (21) zum Detektieren und eine Einrichtung (22-28, 30-33) zum Verarbeiten einer derartigen mechanischen Vibration des Fahrzeugrahmens mit festgelegter Charakteristik; und
- eine Einrichtung (29) zum Übertragen eines Alarms.

10. Vorrichtung nach Anspruch 9, wobei die Einrichtung (21) zum Detektieren einer festgelegten charakteristischen Vibration des Fahrzeugrahmens bei einem Fahrzeug, das mindestens zwei Achsen aufweist, pro Achse des Fahrzeuges höchstens einen Sensor (2 1) umfasst.

11. Vorrichtung nach Anspruch 10, wobei die Einrichtung zum Detektieren einer festgelegten Vibration des Fahrzeugrahmens einen einzigen Sensor (21) umfasst, der mit dem Fahrzeug verbunden ist.

12. Vorrichtung nach Anspruch 11, wobei die Einrichtungen zum Detektieren einer festgelegten charakteristischen Vibration des Fahrzeugrahmens einen einzigen Sensor (21) umfasst, der steif mit dem Fahrzeugrahmen verbunden ist.

13. Vorrichtung nach einem der Ansprüche 9 bis 12, wobei die Verarbeitungseinrichtung eine erste charakteristische Größe in mindestens einem vorgegebenen Frequenzband berechnet, einen Kennwert C berechnet, der einer vorgegebenen Kombination der obigen charakteristischen ersten Größe(n) entspricht, diesen Kennwert C mit einem vorgegebenen Schwellenwert vergleicht und einen Alarm auslöst, wenn das Ergebnis des Vergleichs eine vorgegebene Beziehung erfüllt.

14. Vorrichtung nach Anspruch 13, wobei die Verarbeitungseinrichtung für jede Achse des Fahrzeugs eine erste charakteristische Größe in mindestens einem für diese Fahrzeugachse spezifischen ersten Frequenzband berechnet.

15. Vorrichtung nach Anspruch 14, wobei die Verarbeitungseinrichtung einen Kennwert C berechnet, der einem gewichteten Wert dieser ersten charakteristischen Größen der spezifischen ersten Frequenzbänder der Fahrzeugachsen entspricht.

16. Vorrichtung nach einem der Ansprüche 13 bis 15, wobei das oder die Frequenzbänder im Frequenzbereich von 20 bis 100 Hz enthalten sind.

17. Vorrichtung nach Anspruch 13, wobei die Verarbeitungseinrichtung zusätzlich die Umdrehungsfrequenz des Luftreifens bestimmt und wobei das oder die ersten Frequenzbänder schmale Frequenzbänder sind, von denen jedes um eine Frequenz zentriert ist, die einem Mehrfachen der Umdrehungsfrequenz des Luftreifens entspricht.

18. Vorrichtung nach Anspruch 17, wobei das oder die Frequenzbänder im Frequenzbereich von 10 bis 200 Hz enthalten sind.

19. Vorrichtung nach einem der Ansprüche 13 bis 18, wobei die Einrichtung zur Verarbeitung der Vibrationen des Rahmens zusätzlich eine zweite charakteristische Größe in mindestens einem zweiten vorgegebenen Frequenzband berechnet, wobei die Vibrationen in diesem zweiten Band die Vibrationen im wesentlichen unabhängig vom Aufliegen des Luftreifens auf seinem Sicherheitseinsatz sind und der Schwellenwert zum Auslösen des Alarms von der zweiten charakteristischen Größe abhängt.

20. Vorrichtung nach Anspruch 19, wobei das zweite Frequenzband im Frequenzbereich von 3 bis 7 Hz liegt.

21. Vorrichtung nach Anspruch 19, wobei das zweite Frequenzband im Frequenzbereich von 100 bis 200 Hz liegt.

22. Vorrichtung nach Anspruch 19, wobei die zweiten Bänder außerhalb von Frequenzen liegen, die einem Vielfachen der Umdrehungsfrequenz des Luftreifens entsprechen.

23. Vorrichtung nach einem der Ansprüche 13 bis 22, wobei die gemessene charakteristische Größe die Vibrationsenergie der Signale ist, ausgedrückt durch den RMS-Wert.

24. Vorrichtung nach einem der Ansprüche 13 bis 23, wobei die Verarbeitungseinrichtung keinen Alarm überträgt, wenn die Geschwindigkeit des Fahrzeugs unter einem vorgegebenen Schwellenwert liegt.

## Claims

1. A safety insert (9, 15) intended to be mounted in an assembly comprising a tyre (3) and a rim (1) of a vehicle and radially externally relative to the rim (1), said insert having a radially outer bearing surface (10) which defines a radial support for the crown of the tyre when said tyre is deflated and means for generating vibrating warning signals when travelling in a support configuration, **characterised in that** said means consist of a variation as a function of the azimuth of at least one characteristic of said bearing surface (10) selected from the group consisting of the transverse position of the bearing surface and the circumferential orientation of straight ribs arranged on the bearing surface.

2. A safety insert (12, 15, 16) intended to be mounted in an assembly comprising a tyre (3) and a rim (1) of a vehicle and radially externally relative to the rim (1), said insert having a radially outer bearing surface (13) which defines a radial support for the crown of the tyre when said tyre is deflated and means for generating vibrating warning signals when travelling in a support configuration, **characterised in that** said means consist of elements (14) arranged on the bearing surface (13) which, when radially compressed, generate a transverse force, and **in that** said elements comprise ribs or lamellae (14) the inclinations of which relative to a longitudinal plane are variable as a function of their azimuth.

3. A safety insert (12, 15, 16) according to Claim 2, in which the bearing surface (13) has a rolling radius in a support configuration which is substantially constant.

4. A safety insert (15) according to one of Claims 1 to 3, in which the bearing surface has at least two axially adjacent zones (A, B), the zone (B) intended to be arranged towards the outside of the vehicle not comprising means for generating signals oriented parallel to the axis of rotation of the tyre and rim assembly.

5. A safety insert (16) according to one of Claims 1 to 4, in addition comprising means (18, 19) for generating vertical signals.

6. A safety insert (9, 12, 15, 16) according to one of Claims 1 to 5, in which the bearing surface of the insert comprises an active zone of generation of signals such that said signals have a maximum preceded and followed by a minimum in the opposite direction.

7. A safety insert (9, 12, 15, 16) according to Claim 6, in which said active zone is of between 1/4 and 1/2 of the circumference of said insert.

8. A safety insert (9, 12, 15, 16) according to one of Claims 6 or 7, in which the absolute value of the minima of the signal generated is of between 1/4 and 3/4 of the absolute value of the maximum.

9. A device (20) for detecting the bearing of a tyre of a vehicle on its support, fitted with a plurality of tyre (3), rim (1) and safety insert (9, 12, 15, 16) assemblies according to one of Claims 1 to 8, mounted between the rim and the radially inner face of the tread of the tyre, on the corresponding safety insert, each assembly being suitable for transmitting a characteristic vibration to the chassis of the vehicle in response to the bearing of one of the tyres on the corresponding safety insert subsequent to a loss of pressure in the tyre, comprising:
- detection (21) and processing means (22-28, 30-33) for such a mechanical vibration of a predetermined characteristic of the chassis of the vehicle; and
- means for transmission (29) of an alarm.

10. A device according to Claim 9, in which, the vehicle comprising at least two axles, the means (21) for detecting a predetermined characteristic vibration of the chassis of the vehicle comprise at most one sensor (21) per axle of said vehicle.

11. A device according to Claim 10, in which the means for detecting a predetermined characteristic vibration of the chassis of the vehicle comprise a single sensor (21) connected to the vehicle.

12. A device according to Claim 11, in which the means for detecting a predetermined characteristic vibration of the chassis of the vehicle comprise a single sensor (21) rigidly connected to the chassis of the vehicle.

13. A device according to one of Claims 9 to 12, in which the processing means calculate a first characteristic variable in at least a first given frequency band, calculate a criterion C corresponding to a given combination of the above first characteristic variable(s), compare this criterion C with a given threshold and trigger an alarm when the result of the comparison satisfies a given relationship.

14. A device according to Claim 13, in which, for each of the axles of the vehicle, the processing means calculate a first characteristic variable in at least one first band of frequencies specific to said axle of the vehicle.

15. A device according to Claim 14, in which the processing means calculate a criterion C corresponding to a weighted value of said first characteristic variables of said first frequency bands specific to said axles of the vehicle.

16. A device according to one of Claims 13 to 15, in which the first frequency band(s) are between 20 and 100 Hz.

17. A device according to Claim 13, in which the processing means furthermore determine the frequency of rotation of the tyre and in which said first frequency band(s) are narrow frequency bands each centred on a multiple frequency of said frequency of rotation of the tyre.

18. A device according to Claim 17, in which said first frequency band(s) are between 10 and 200 Hz.

19. A device according to one of Claims 13 to 18, in which the processing means for the vibrations of the chassis furthermore calculate a second characteristic variable in at least a given second band of frequencies such that, in said second band, said vibrations are substantially independent of the tyre bearing on its safety insert and such that the threshold for triggering the alarm is a function of said second characteristic variable.

20. A device according to Claim 19, in which said second band of frequencies is between 3 and 7 Hz.

21. A device according to Claim 19, in which said second band of frequencies is between 100 and 200 Hz.

22. A device according to Claim 19, in which said second bands are located outside the multiple frequencies of the frequency of rotation of the tyre.

23. A device according to one of Claims 13 to 22, in which the characteristic variable measured is the vibrational energy of the signals which is expressed by the RMS value.

24. A detection method according to one of Claims 13 to 23, in which the processing means do not transmit an alarm when the speed of the vehicle is less than a given threshold.
